# EUROPÄISCHE PATENTANMELDUNG

(11) **EP 2 759 964 A1**
(43) Veröffentlichungstag der Anmeldung: **30.07.2014**
(21) Anmeldenummer: 13152999.2
(22) Anmeldetag: 29.01.2013
(51) Int. Cl.: G06Q 10/06

(54) **Computerimplementiertes Verfahren zur Datenverwaltung von Produktvarianten in der Steuergeräteentwicklung**

(71) Anmelder: dSPACE digital signal processing and control engineering GmbH, 33102 Paderborn (DE)
(72) Erfinder: Stichling, Dr. Dirk, 33106 Paderborn (DE); Kuhlmann, Ansgar, 33102 Paderborn (DE); Bomert, Andreas, 33100 Paderborn (DE); Becke, Daniel, 33175 Bad Lippspringe (DE); Richert, Dr. Jobst, 59558 Lippstadt (DE)

(57) **Zusammenfassung**

Dargestellt und beschrieben ist ein computerimplementiertes Verfahren zur Datenverwaltung von Produktvarianten in der Steuergeräteentwicklung.

Eine konsistente Datenverwaltung wird dadurch sichergestellt, durch
zunächst

- die Vorgabe von Produktmerkmalen (1) in einem Variantenmodell,
- die Vorgabe von Komponenten (4) in wenigstens einer Domäne (5),
- die Definition von Merkmal-Komponenten-Abhängigkeiten (6) durch Zuordnung von Komponenten (4) zu wenigstens einem Produktmerkmal (1),

nachfolgend
- die Vorgabe wenigstens einer interessierenden Produktvariante (V) durch eine Auswahl von Produktmerkmalen (1),
- die Vorgabe wenigstens einer interessierenden Domäne (PD),
- automatische Ermittlung der zu der interessierenden Produktvariante (V) gehörenden Komponenten (4) durch automatisierte Auswertung der Merkmal-Komponenten-Abhängigkeiten (6),
- automatische Ausgabe der ermittelten Komponenten (4).

## Beschreibung

Die Erfindung betrifft ein Computerimplementiertes Verfahren zur Datenverwaltung von Produktvarianten in der Steuergeräteentwicklung.

Verfahren zur Datenverwaltung von Produktvarianten sind aus ganz unterschiedlichen Bereichen der technischen Entwicklung bekannt und kommen vor allem bei solchen technischen Produkten zur Anwendung, deren Entwicklung beispielsweise die Anpassung des Produktes an verschiedene Anforderungen erfordert. Die komplexe Aufgabe der Datenverwaltung bei der Entwicklung von Produktvarianten wird nachfolgend aufgezeigt für das Gebiet der Steuergeräteentwicklung.

Unter Steuergeräten werden heute üblicherweise für den industriellen Einsatz hergerichtete robuste Kleinrechner verstanden, die meist über integrierte I/O-Schnittstellen verfügen. Auf den häufig mit einem Echtzeitbetriebssystem ausgestatteten Steuergeräten werden Programme ausgeführt, die im weitesten Sinne über die I/O-Schnittstelle mit einem zu steuernden technischen Prozess in Verbindung treten und auf diesen Prozess in gewünschter Weise einwirken. Steuergeräte der beschriebenen Art werden beispielsweise intensiv im automotiven Bereich eingesetzt. Die Entwicklung von Steuergeräten ist mittlerweile ein bedeutender Bestandteil in der Entwicklung von Serienfahrzeugen.

Die Entwicklung eines Steuergeräts lässt sich thematisch in verschiedene Bereiche gliedern, die nachfolgend als Domänen bezeichnet werden, wobei diese Domänen verschiedene Komponenten aufweisen können. In der Steuergeräteentwicklung kann eine Domäne beispielsweise die Domäne der Anforderungsspezifikationen sein mit den verschiedenen Anforderungsspezifikationen als Komponenten. Weitere Domänen könnten die Domäne der Testfälle zum Test der verschiedenen Anforderungen, die Domäne der Testsystembeschreibungen - beispielsweise in Form einer Hardwarebeschreibung eines Hardware-in-the-Loop-Testsystems -, die Domäne der mathematischen Modelle zur Simulation der Steuergeräteumgebung oder die Domäne der Parametersätze zur Parametrierung der Modelle sein; die Aufzählung ist beispielhaft und ließe sich beliebig erweitern.

Bei der Entwicklung komplexer Produkte entstehen üblicherweise verschiedene Produktvarianten. Diese Produktvarianten unterscheiden sich in bestimmten Produktmerkmalen. Die Summe aller Produktmerkmale bildet insgesamt das Variantenmodell. Die unterscheidungserheblichen Produktmerkmale lassen sich in Kategorien gliedern, die nachfolgend als Merkmalkategorien bezeichnet werden. Eine solche Kategorisierung der Produktmerkmale erleichtert die Übersicht über die Produktmerkmale, ist jedoch nicht essentiell für die beanspruchte Lehre. Beispiele für verschiedene Merkmalkategorien könnten in der Steuergeräteentwicklung das Einsatzland des Steuergeräts mit den Produktmerkmalen Europa, Nordamerika, Asien, die Art des Antriebsaggregats (Selbstzünder, Ottomotor) mit Sub-Produktmerkmalen 4-, 6-, 8- und 12-Zylindermotoren oder der Fahrzeugaufbau mit den Sub-Produktmerkmalen Limousine, Kombi, Cabrio sein. Die Produktmerkmale sind mögliche Eigenschaften, in denen sich verschiedene Varianten des Produkts unterscheiden können, Produktvarianten ergeben sich demnach durch Auswahl von Produktmerkmalen, die eine spezielle Produktvariante charakterisieren. Um die vorgenannten Beispiele aufzugreifen, könnte eine Produktvariante beispielsweise die für den europäischen Markt gedachten Steuergeräte für Vierzylinder-Selbstzünder-Motoren sein. Eine weitere Produktvariante könnten die für den US-Markt gedachten Steuergeräte für Selbstzünder-Motoren sein, wobei sich die Notwendigkeit zur Unterscheidung dieser verschiedenen Produktvarianten beispielsweise aus unterschiedlichen Hersteller-Anforderungen in den verschiedenen Märkten oder beispielsweise durch verschiedene gesetzliche Vorgaben in den genannten Regionen ergeben kann.

Vor dem aufgezeigten Hintergrund ist es einleuchtend, dass verschiedene Komponenten in den Domänen nur für bestimmte Produktvarianten gültig sind. Wenn die Produktvarianten der Steuergeräte für Vierzylinder-Selbstzünder-Motoren für Europa und die USA zu unterscheiden sind, dann gibt es möglicherweise sich zumindest teilweise unterscheidende Anforderungen in der Domäne der Anforderungsspezifikationen, sich teilweise unterscheidende Testfälle in der Domäne der Testfälle, sich teilweise unterscheidende Steuerungen in der Domäne der Steuerungsalgorithmen oder sich unterscheidende Parameter und/oder Parametersätze in der Domäne der Parameter bzw. Parametersätze.

Insgesamt stellt es ein erhebliches Problem dar, die Abhängigkeiten von Produktvarianten und Komponenten während eines Entwicklungsprozesses zuverlässig zu verfolgen, insbesondere dann, wenn sich Merkmalkategorien innerhalb des Variantenmodells ändern. Ein weiteres Problem kann schon allein darin bestehen, zu einer bestimmten Produktvariante zuverlässig die entsprechenden gültigen Komponenten aus bestimmten Domänen zu ermitteln, insbesondere dann, wenn die Informationen über die Komponenten der verschiedenen Domänen nur verstreut hinterlegt sind. Letztlich ist es durchaus problematisch, die aufgezeigte Vielzahl an das Entwicklungsprojekt ausmachender und begleitender Informationen konsistent zu halten. Eine Änderung im Variantenmodell wirft beispielsweise die Frage auf, inwieweit sich die Beziehung einer geänderten Produktvariante zu den Komponenten ändert.

Aufgabe der vorliegenden Erfindung ist es daher, eine computerimplementierte technische Lösung anzugeben, mit der die aufgezeigten Probleme im Zusammenhang mit der Datenverwaltung von Produktvarianten in der Steuergeräteentwicklung gelöst werden können.

Die zuvor hergeleitete und aufgezeigte Aufgabe ist bei einem computerimplementierten Verfahren zur Datenverwaltung von Produktvarianten insbesondere in der Steuergeräteentwicklung dadurch gelöst, dass zunächst Produktmerkmale in einem Variantenmodell vorgegeben werden, dass Komponenten in wenigstens einer Domäne vorgegeben werden und dass Merkmal-Komponenten-Abhängigkeiten durch Zuordnung von Komponenten zu Produktmerkmalen definiert werden. Es ist unerheblich, ob zuerst die Produktmerkmale oder die Komponenten vorgegeben werden, wichtig ist lediglich, dass dem Verwender des Verfahrens die Möglichkeit gegeben wird, systematisch Produktmerkmale vorzugeben und systematisch Komponenten in Domänen vorzugeben, wobei die Produktmerkmale in Merkmalkategorien gegliedert sein können. Die Vorgabe von Produktmerkmalen und Komponenten kann beispielsweise in einer Datenbank erfolgen. Bei den Merkmal-Komponenten-Abhängigkeiten handelt es sich um Informationen, die angeben, welche Komponente mit welchem Produktmerkmal bzw. mit welchen Produktmerkmalen verknüpft ist, also für welches Produktmerkmal eine bestimmte Komponente relevant ist. Eine Komponente kann selbstverständlich auch für verschiedene Produktmerkmale relevant sein.

Durch die Hinterlegung der definierten Merkmal-Komponenten-Abhängigkeiten gestattet es das erfindungsgemäße Verfahren nachfolgend, wenigstens eine interessierende Produktvariante durch eine Auswahl von Produktmerkmalen vorzugeben und wenigstens eine interessierende Domäne vorzugeben, woraufhin dann automatisch die zu der interessierenden Produktvariante gehörenden Komponenten aus der interessierenden Domäne ermittelt werden können durch die automatisierte Auswertung der zuvor festgelegten Merkmal-Komponenten-Abhängigkeiten. Daraufhin erfolgt die automatische Ausgabe der ermittelten Komponenten. Die durch die Auswahl von Produktmerkmalen charakterisierte Produktvariante wirkt demnach gleichsam als Filter, das auf die Gesamtheit der Domänendaten angewendet wird, um daraus die für die Produktvariante interessierenden Komponenten zu erhalten.

Die automatisierte Auswertung der Merkmal-Komponenten-Abhängigkeiten kann beispielsweise darin bestehen, dass alle Merkmal-Komponenten-Abhängigkeiten durchsucht werden und solche Abhängigkeiten extrahiert werden, die eine Verbindung zu wenigstens einem Produktmerkmal der vorgegebenen interessierenden Produktvariante umfassen und gleichzeitig mit einer Komponente verbunden sind, die in der vorgegebenen interessierenden Domäne angesiedelt ist. Die automatische Ausgabe der ermittelten Komponenten kann informativen Charakter haben, beispielsweise durch Anzeige der zuvor automatisch ermittelten Komponenten, die ermittelten Komponenten können aber auch als Dateneinheiten ausgegeben und so einer weiteren Verarbeitung zur Verfügung gestellt werden. Es ist beispielsweise möglich, dass über das geschilderte computerimplementierte Verfahren all jene Testfälle ermittelt werden, die - jedenfalls auch - mit wenigstens einem Produktmerkmal der vorgegebenen interessierenden Produktvariante verbunden sind und sogleich einem Testsystem zugeführt werden, in dem ein entsprechender Test durchgeführt wird.

In einer besonders vorteilhaften Ausgestaltung des Verfahrens ist vorgesehen, dass das Variantenmodell, die Domänen und die Merkmal-Komponenten-Abhängigkeiten in einer gemeinsamen Datenbasis erfasst werden. In diesem Ausführungsbeispiel wird der gesamte Entwicklungsprozess in einer einheitlichen, gemeinsamen Datenbasis abgebildet, weshalb das computerimplementierte Verfahren zu jeder Zeit über eine vollständige Information aller Abhängigkeiten verfügt. Die gemeinsame Datenbasis umfasst dabei insbesondere nicht nur organisatorische Informationen über die Komponenten der Domänen, sondern die in den verschiedenen Domänen bearbeiteten Informationen selbst. Die gemeinsame Datenbasis hat demnach nicht nur die Information, dass es bestimmte Testfälle und Testsequenzen für das Steuergerät gibt, dass es bestimmte mathematische Modelle zur Simulation der Steuergeräteumgebung gibt und dass bestimmte Parameter vorhanden sind, sondern verfügt über und verwaltet vielmehr die Testfallbeschreibungen, den Code der Testsequenzen, die inhaltliche und datenmäßige Beschreibung der mathematischen Modelle und die Parameter mit den ihnen zugeordneten Werten an und für sich.

Wenn beispielsweise von dem Softwarewerkzeug, mit dem die mathematischen Modell erstellt werden, eines der mathematischen Modell bearbeitet wird, dann greift dieses Softwarewerkzeug idealerweise auf die gemeinsame Datenbasis zu. Insgesamt wird durch die verfahrensgemäße Vorgehensweise dann eine Arbeitsumgebung nach Art eines Client-Server-Systems implementiert, bei dem alle verschiedenen mit unterschiedlichen Domänendaten arbeitenden Clients mit einem konsistenten Stand der einheitlichen Datenbasis arbeiten. Vorzugsweise wird das computerimplementierte Verfahren in diesem Fall durch eine einzige integrierte Anwendung implementiert, die über die vollständige Datenbasis verfügt. Bei einem derartig implementierten Verfahren und einer derartig ausgestalteten Datenbasis ist es nicht mehr erforderlich, entsprechende Informationen aus den unterschiedlichen Domänen zu beschaffen, falls diese Domänen mit unterschiedlichen Entwicklungswerkzeugen und einer separaten Datenhaltung ausgestattet sind. Dies kann bei der integrierten Lösung zur Datenverwaltung von Produktvarianten zwar auch noch der Fall sein, jedenfalls werden die interessierenden Daten aus den verschiedenen Domänen neben den Informationen über das Variantenmodell auch in der einheitlichen gemeinsamen Datenbasis vorgehalten.

In einer Weiterbildung des Verfahrens sind die definierten Merkmal-Komponenten-Abhängigkeiten Existenzabhängigkeiten und/oder Wertabhängigkeiten. Bei einer Existenzabhängigkeit ist nur die Information von Interesse, dass eine Abhängigkeit zwischen wenigstens einem Produktmerkmal und einer Komponente einer Domäne existiert. Bei einer Wertabhängigkeit sind darüberhinaus auch noch die Daten selbst von Interesse, die sich hinter der assoziierten Komponente der Domäne verbergen. Es ist dann also vorgesehen, dass wenigstens ein Datum für die beteiligte Komponente vorgegeben wird. Bei diesen Daten kann es sich beispielsweise um die Werte handeln, mit denen Parameter belegt sind. Beispielsweise kann ein Parameter P1 in der Regelung eines Antiblockiersystems unterschiedliche Werte aufweisen für ein für den europäischen Markt gedachtes Steuergerät und für ein für den US-Markt gedachtes Steuergerät. Bei einer derartigen Wertabhängigkeit ist insbesondere vorgesehen, dass bei der Vorgabe von mehreren Abhängigkeiten zwischen einer Komponente einer Domäne zu ein oder mehreren Produktmerkmalen für jede Merkmalskombination wenigstens ein Datum hinterlegt werden kann.

In einer Ausgestaltung des computerimplementierten Verfahrens ist vorgesehen, dass die Komponenten innerhalb einer Domäne in separaten Dateneinheiten abgelegt werden, beispielsweise in separaten Dateien. Im Fall der Domäne der Anforderungsspezifikationen bedeutet dies, dass die Spezifikationen separat abgelegt und als separate Dateneinheit verfügbar sind, also nicht vermischt mit anderen Spezifikationen in einer gemeinsamen Dateneinheit vorliegen. Dies ist insbesondere dann von Vorteil, wenn die automatisierte Auswertung der Merkmal-Komponenten-Abhängigkeiten in einer Existenzprüfung der Abhängigkeit besteht, also lediglich überprüft wird, ob eine Abhängigkeit zwischen der vorgegebenen interessierenden Produktvariante und einer Komponente in wenigstens einer interessierenden vorgegebenen Domäne besteht. In diesem Fall besteht die Möglichkeit, die mit den ermittelten Komponenten in Zusammenhang stehenden Dateneinheiten ohne den Zwischenschritt einer besonderen Extraktion auszugeben, die Dateneinheiten können insbesondere unverändert ausgegeben werden.

In einer alternativen Ausgestaltung des Verfahrens werden die Komponenten innerhalb einer Domäne in einer gemeinsamen Dateneinheit abgelegt, so dass die Komponenten also nicht separat vorliegen. Dies kann beispielsweise bei der Hinterlegung von Parametern und Parametersätzen sinnvoll sein. Beispielsweise können sich bestimmte Parameter und Parametersätze zur Parametrierung eines mathematischen Modells oder eines Regelungsalgorithmus nur durch unterschiedliche Werte für bestimmte Parameter unterscheiden, wobei die Parameter an sich aber gleich sind oder zumindest teilweise in mehreren Parametersätzen vorkommen. Durch geschickte Aufstellung mehrerer Parametersätze in einer gemeinsamen Dateneinheit lässt sich auf sehr einfache Weise ein guter Überblick über Ähnlichkeiten und Unterschiede der verschiedenen Parametersätze gewinnen und vermitteln. Wenn die Komponenten innerhalb einer Domäne in einer gemeinsamen Dateneinheit abgelegt werden, dann ist vorgesehen, dass die automatisierte Auswertung der Merkmal-Komponenten-Abhängigkeiten zunächst in einer Existenzprüfung der Abhängigkeit besteht, wobei die mit den ermittelten Komponenten in Zusammenhang stehenden Einträge aus der gemeinsamen Dateneinheit extrahiert und ausgegeben werden. Die Ausgabe kann wiederum lediglich informativen Charakter haben, sie kann aber auch in einer Zurverfügungstellung der extrahierten Daten für andere automatisierte Prozesse dienen, wobei die ermittelten Einträge aus der gemeinsamen Dateneinheit insbesondere in einer separaten Datei ausgegeben werden.

In einer bevorzugten Ausgestaltung des Verfahrens werden die Produktmerkmale hierarchisch gegliedert definiert. Hierarchisch gegliedert bedeutet hier, dass Produktmerkmale in Sub-Produktmerkmale gegliedert werden, wobei sich die hierarchische Struktur auch auf die Sub-Produktmerkmale auf niedrigeren Hierarchieebenen fortpflanzen kann. Ein Beispiel für eine solche hierarchische Gliederung der Produktmerkmale kann die regionale Zugehörigkeit sein. Die Merkmalkategorie "Länder" könnte beispielsweise die Produktmerkmale "Europa", "Asien" und "Nord-Amerika" aufweisen. Das Produktmerkmal "Europa" könnte beispielsweise hierarchisch in die Sub-Produktmerkmale "Deutschland", "Frankreich", "Großbritannien" und "sonst" gegliedert sein. Die hierarchisch gegliederte Definition der Merkmalkategorien ermöglicht es in einer Weiterbildung des beanspruchten Verfahrens, dass eine für ein Produktmerkmal auf höherer Hierarchieebene definierte Merkmal-Komponenten-Abhängigkeit auch auf solche Varianten übertragen wird, die das Produktmerkmal auf niedrigerer Hierarchieebene aufweisen. Am vorgenannten Beispiel erläutert, bedeutet dies, dass beispielsweise ein für die Variante der europäischen Selbstzündermotoren definierte Komponenten-Abhängigkeit auch auf hierarchisch niederrangigere Sub-Varianten erstreckt wird, die definierte Komponenten-Abhängigkeit demzufolge also auch gilt für diejenigen Selbstzünder-Varianten, die dediziert für "Deutschland", "Frankreich", "Großbritannien" oder "sonst" definiert worden sind. Ein derartig hierarchisches Verhalten ist insbesondere für den Fall der Datenhaltung vorteilhaft, bei dem die Komponenten innerhalb einer Domäne in einer gemeinsamen Dateneinheit abgelegt worden sind. So kann beispielsweise in einer tabellarischen Auflistung aller Parametersätze für die relevanten Varianten sehr einfach dargestellt und erkannt werden, ob bestimmte Parameter auch für hierarchisch untergeordnete Varianten gelten oder nicht. Es ist dann ohne weiteres erkennbar, ob ein Parameter für eine bestimmte Variante überhaupt existiert, also Existenzabhängigkeit besteht. Im Falle der Existenz eines Parameters für eine bestimmte Variante lässt sich der Wert dann auch ohne weiteres auf hierarchisch niederrangige Varianten übertragen, die untergeordneten Varianten hängen dann wertemäßig von der höherrangigen Variante ab, es gibt also eine Wertabhängigkeit. Zusätzlich kann vorgesehen sein, dass Wertübertragungen in hierarchisch niedereangigere Produktvarianten nur dann erfolgt, wenn hier keine dedizierten Wertvorgaben existieren.

In einer besonders bevorzugten Ausgestaltung des Verfahrens ist vorgesehen, dass zwischen einer Komponente und mehreren Produktmerkmalen in mehreren Merkmalkategorien jeweils eine Wertabhängigkeit definiert wird. Wenn VK1, VK2, ...,VKn die betroffenen Merkmalkategorien sind und vk1, vk2, ..., vkn die jeweiligen Anzahlen der Merkmal-Komponenten-Abhängigkeiten in Form von Wertabhängigkeiten sind, dann werden erfindungsgemäß vk1*vk2*...*vkn Wertevorgaben für die Komponente für die verschiedenen Kombinationen der Produktmerkmale gemacht.

Die definierten Merkmal-Komponenten-Abhängigkeiten lassen sich im Rahmen des in Rede stehenden computerimplementierten Verfahrens auch noch weitergehend nutzen, um eine konsistente Datenverwaltung sicherzustellen. So ist in einer Ausgestaltung des erfindungsgemäßen Verfahrens vorgesehen, dass bei Vorgabe der Löschung eines zuvor definierten Produktmerkmals ermittelt wird, ob das zu löschende Produktmerkmal mit Komponenten assoziiert ist, was durch Auswertung der vorhandenen Merkmal-Komponenten-Abhängigkeiten jederzeit möglich ist. Für den Fall, dass das zu löschende Produktmerkmal mit Komponenten assoziiert ist, liegt ein Konfliktfall vor. Auf den Konfliktfall wird zunächst aufmerksam gemacht, indem die vorhandenen Merkmal-Komponenten-Abhängigkeiten aufgezeigt werden und die Löschung des zu löschenden Produktmerkmals ausgesetzt wird.

In einer bevorzugten Ausgestaltung des Verfahrens wird jedoch nicht nur auf einen Konfliktfall, der zu einem teilweisen Datenverlust führen würde, hingewiesen, vielmehr wird auch aktiv und automatisch eine Auflösung des Konflikts angeboten. Dies geschieht, indem bei Existenz einer vorhandenen Merkmal-Komponenten-Abhängigkeit automatisch - ggf. nach Freigabe durch den Nutzer - eine neue Version des verwalteten Datenbestandes in Form einer Kopie des verwalteten Datenbestandes erzeugt wird, wobei in der neu erzeugten Version des verwalteten Datenbestandes das zu löschende Produktmerkmal entfernt wird oder der Konflikt anderweitig aufgelöst wird. Beispielsweise könnte eine Merkmal-Komponenten-Abhängigkeit auf ein höherrangiges Produktmerkmal verweisen, wenn ein niederrangigeres Produktmerkmal gelöscht worden ist. Durch diese Maßnahme ist gewährleistet, dass das zu löschende Produktmerkmal insgesamt nicht aus der Datenverwaltung der Produktmerkmale fallen kann. Durch die Versionierung bleiben zu löschende Produktvarianten in einer alten Version erhalten und sind dort nach wie vor zugänglich. Die weitere Entwicklung des Variantenmodells wie auch der Gesamtheit von Variantenmodell, Domänen und Merkmal-Komponenten-Abhängigkeiten kann so in neuen Versionen des Datenbestands fortschreiten. In einer vorteilhaften Weiterentwicklung des Verfahrens werden auch die mit dem gelöschten Produktmerkmal assoziierten Merkmal-Komponenten-Abhängigkeiten gelöscht, da einer der beiden Verbindungspartner nicht mehr vorhanden ist. Die Erstellung einer Kopie des verwalteten Datenbestandes umfasst insbesondere Kopien des Variantenmodells, der Domänen, der Definition von Produktmerkmalen und der Definition von Merkmal-Komponenten-Abhängigkeiten.

In einer weiteren Maßnahme zur Förderung der konsistenten Datenverwaltung werden solche Komponenten automatisch aus dem verwalteten Datenbestand gelöscht, die Merkmal-Komponenten-Abhängigkeiten ausschließlich zu dem gelöschten Produktmerkmal aufweisen. Auch diese Maßnahme kann unter die vorbehaltliche Zustimmung des Verwenders des Verfahrens gestellt werden, so dass keine unbeabsichtigten oder unüberlegten Löschungen im Datenbestand erfolgen.

Die Erstellung einer neuen Version kann nicht nur sinnvoll oder geboten erscheinen unter der Voraussetzung der Löschung eines Produktmerkmals, vielmehr kann der Wunsch nach der Erstellung einer neuen Version des Datenbestandes auch anderweitig veranlasst sein, beispielsweise um einen Entwicklungsstand zu dokumentieren. Überraschenderweise hat sich herausgestellt, dass der Umgang mit verschiedenen Versionen durch das vorgeschlagene Verfahren zur Datenverwaltung von Produktvarianten leicht unterstützt werden kann. So ist bei einer Weiterentwicklung des Verfahrens realisiert, dass eine neue Version des Variantenmodells durch eine veränderbare Kopie einer alten Version des Variantenmodells erzeugt wird und/oder dass eine neue Version des aus allen Domänen und allen Merkmal-Komponenten-Abhängigkeiten bestehenden Domänenmodells durch eine veränderbare Kopie einer alten Version des Domänenmodells erzeugt wird. Mit dem weiter entwickelten Verfahren ist es also möglich, neue Versionen des Variantenmodells und/oder des Domänenmodells zu erzeugen. So ist es beispielsweise möglich, das Variantenmodell in einer neuen Version fortzuentwickeln, während das alte Variantenmodell zusammen mit dem alten Domänenmodell und den Merkmal-Komponenten-Abhängigkeiten zwischen diesen beiden Modellen noch bearbeitet wird.

Wenn eine neue Version des Variantenmodells erstellt worden ist, wird der Wunsch aufkommen, wieder eine Zuordnung zwischen Variantenmodell in der neuen Version und Komponenten in den jeweiligen Domänen vorzunehmen, wobei eine neue Version der Domänen noch nicht existiert. Erfindungsgemäß ist deshalb vorgesehen, dass bei einem Wechsel einer alten Version eines Domänenmodells auf eine neue Version des Variantenmodells zunächst eine neue Version des Domänenmodells durch Kopie der alten Version des Domänenmodells erzeugt wird und die mit der alten Version des Variantenmodells assoziierten Merkmal-Komponenten-Abhängigkeiten automatisch in die neue Version des Variantenmodells übertragen werden, wobei das automatische Übertragen durch das Auffinden von Korrespondenzen geschieht. Insbesondere ist vorgesehen, dass das automatische Auffinden von Korrespondenzen direkt durch Auswertung von explizit hinterlegten Referenzen - und damit auch unabhängig von Benennungen -, durch Vergleich von Benennungen und/oder von Merkmalskombinationen der Merkmalkategorien in der alten Version des Variantenmodells mit Benennungen und/oder mit Merkmalskombinationen der Merkmalkategorien in der neuen Version des Variantenmodells erfolgt.

Im Einzelnen gibt es nun eine Vielzahl von Möglichkeiten, das zuvor geschilderte Verfahren auszugestalten und weiterzubilden. Nachfolgend wird das erfindungsgemäße Verfahren zur Datenverwaltung von Produktvarianten anhand der folgenden Beschreibung von Ausführungsbeispielen in Verbindung mit der Zeichnung erläutert. In der Zeichnung zeigen
- Fig. 1: ein hierarchisch gegliedertes Variantenmodell mit Produktmerkmalen in Merkmalkategorien,
- Fig. 2: die Definition von Merkmal-Komponenten-Abhängigkeiten durch Zuordnung von Komponenten zu Produktmerkmalen,
- Fig. 3: die Definition von interessierenden Produktvarianten durch jeweils eine Auswahl von Produktmerkmalen gemäß Fig. 1,
- Fig. 4: die automatisierte Auswertung der Merkmal-Komponenten-Abhängigkeiten nach Maßgabe der interessierenden Produktvarianten und die Ausgabe der ermittelten Komponenten,
- Fig. 5: die Ablage von Komponenten innerhalb einer Domäne,
- Fig. 6: die automatisierte Auswertung von Merkmal-Komponenten-Abhängigkeiten nach Maßgabe interessierender Produktvarianten bei Wertabhängigkeiten gemäß einem ersten Beispiel,
- Fig. 7: die automatisierte Auswertung von Merkmal-Komponenten-Abhängigkeiten nach Maßgabe interessierender Produktvarianten bei Wertabhängigkeiten gemäß einem zweiten Beispiel,
- Fig. 8: die Übertragung von Merkmal-Komponenten-Abhängigkeiten auf Produktvarianten mit Produktmerkmalen auf niedrigerer Hierarchieebene,
- Fig. 9a, 9b: die Versionisierung des Datenbestandes im Konfliktfall bei der Löschung eines definierten Produktmerkmals,
- Fig. 10a, 10b: die automatische Auflösung von Inkonsistenzen im Datenbestand durch Versionisierung und Löschung unvollständiger Merkmal-Komponenten-Abhängigkeiten und
- Fig. 11a, 11b: die separate Erzeugung von neuen Versionen des Variantenmodells und/oder des Domänenmodells.

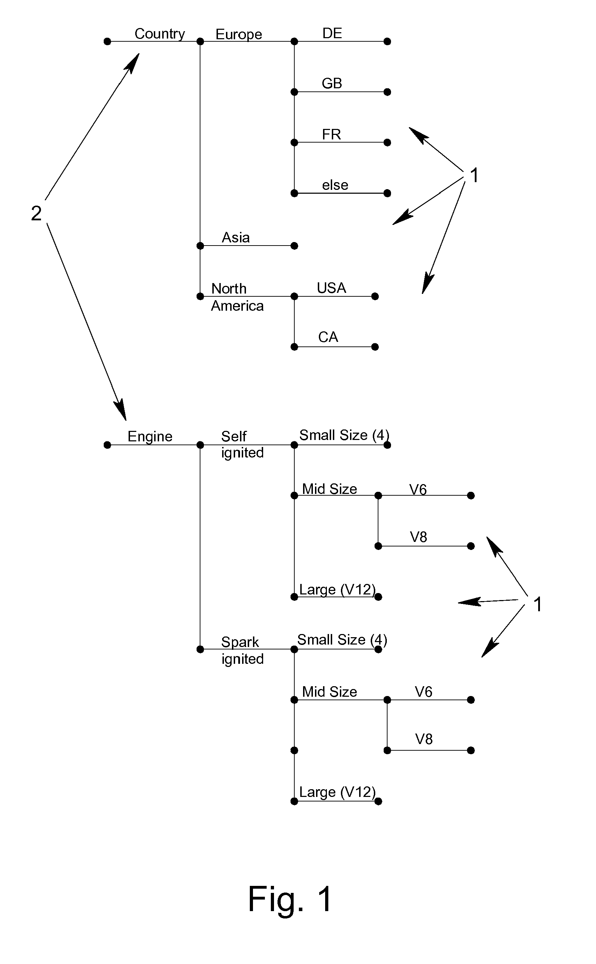

In Fig. 1 ist zunächst der Teil des computerimplementierten Verfahrens zur Datenverwaltung von Produktvarianten in der Steuergeräteentwicklung gezeigt, der sich mit der Vorgabe von Produktmerkmalen 1 befasst, die hier zudem in Merkmalkategorien 2 gegliedert sind. Als Merkmalkategorien 2 sind hier der Einsatzort (Country) und die Art des Motors (Engine) dargestellt. Die Produktmerkmale 1 sind jene Merkmale, die sich im Rahmen der Produktentwicklung als geeignete oder erforderliche Unterscheidungskriterien zwischen verschiedenen Produktvarianten herausstellen.

Die Merkmalkategorie 2 "Country" zerfällt demzufolge in die Produktmerkmale 1, Europe (Europa), Asia (Asien) und North America (Nord Amerika), wobei das Produktmerkmal Europe in die weiteren Produktmerkmale DE, GB, FR und else (sonst) zerfällt. Die Produktmerkmale können demnach hierarchisch gegliedert werden. Vergleichbares gilt für die Merkmalkategorie 2 "Engine", die sich mit der Motorisierung des Fahrzeugs auseinandersetzt, für das im vorliegenden Beispiel ein bestimmtes Steuergerät zu entwickeln ist. Die Merkmalkategorie 2, Engine zerfällt demnach in die Produktmerkmale 1, Self-Ignited (Selbstzünder) und Spark-Ignited (Otto-Motor). Die vorgenannten Produktmerkmale 1 untergliedern sich dann wiederum in verschiedenen Größen der Motorisierung, hier in Abhängigkeit von der Zylinderzahl dargestellt.

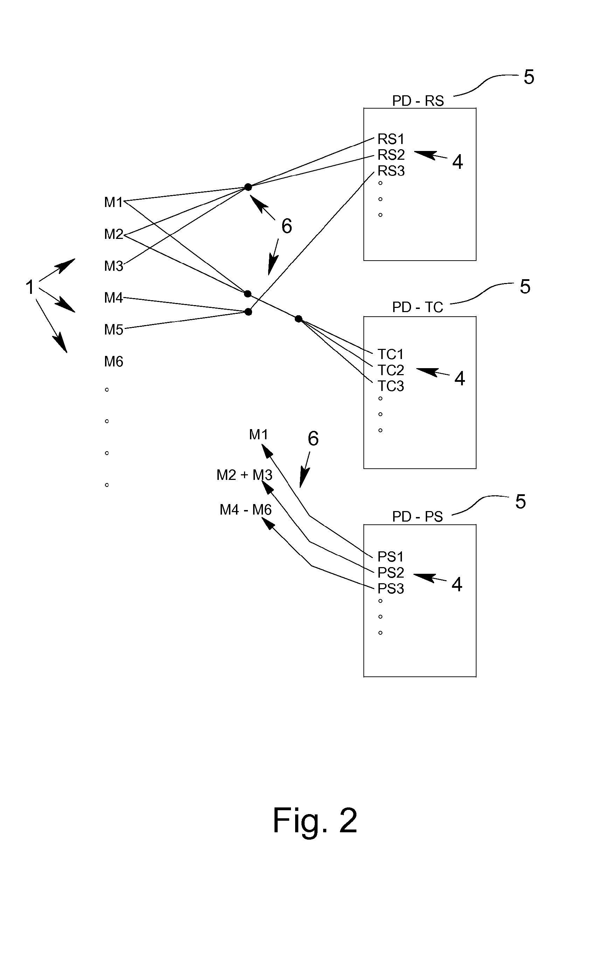

Fig. 2 zeigt die Definition von Merkmal-Komponenten-Abhängigkeiten 6 durch Zuordnung von Komponenten 4 zu Produktmerkmalen 1. Im einzelnen nicht mehr dargestellt sind sämtliche Produktmerkmale 1 des Variantenmodells gemäß Fig. 1, sondern nur noch jene Merkmale M1, M2,..., M6, die an Merkmal-Komponenten-Abhängigkeiten 6 beteiligt sind. Das Merkmal M1 sei beispielsweise das Merkmal GB in der Merkmalkategorie Country. Zu erkennen sind die vorgegebenen Komponenten 4, RS1, ..., TC1, ..., PS1, ... in verschiedenen Domänen 5, PD-RS, PD-TC und PD-PS. PD-RS steht dabei für die Domäne der Anforderungsspezifikationen (Requirement Specification), PD-TC steht für die Domäne der Testfälle (Testcases) und PD-PS steht hier beispielhaft für die Domäne der Parameter und Parametersätze (Parametersets). Die Merkmal-Komponenten-Abhängigkeiten 6 werden dadurch definiert, dass Komponenten 4 zu Produktmerkmalen 1 zugeordnet werden. Die entsprechenden Zuordnungen sind in Fig. 2 durch Verbindungslinien dargestellt, wobei beispielsweise die Komponenten 4, RS1, RS2 mit den Produktmerkmalen 1, M1, M2, M3 verbunden sind. Die Merkmal-Komponenten-Abhängigkeiten 6 zwischen den Komponenten 4, PS1, PS2, PS3 und den Produktmerkmalen 3, M1-M6 sind in Fig. 2 der Übersichtlichkeit halber nur angedeutet. Die dargestellte Hinterlegung der vollständigen Projektinformationen hinsichtlich der Produktmerkmale 1 und der Komponenten 4 gestattet das mühelose Auffinden von Daten und die vergleichsweise einfache Detektion von Inkonsistenzen bei Veränderung der Projektdaten.

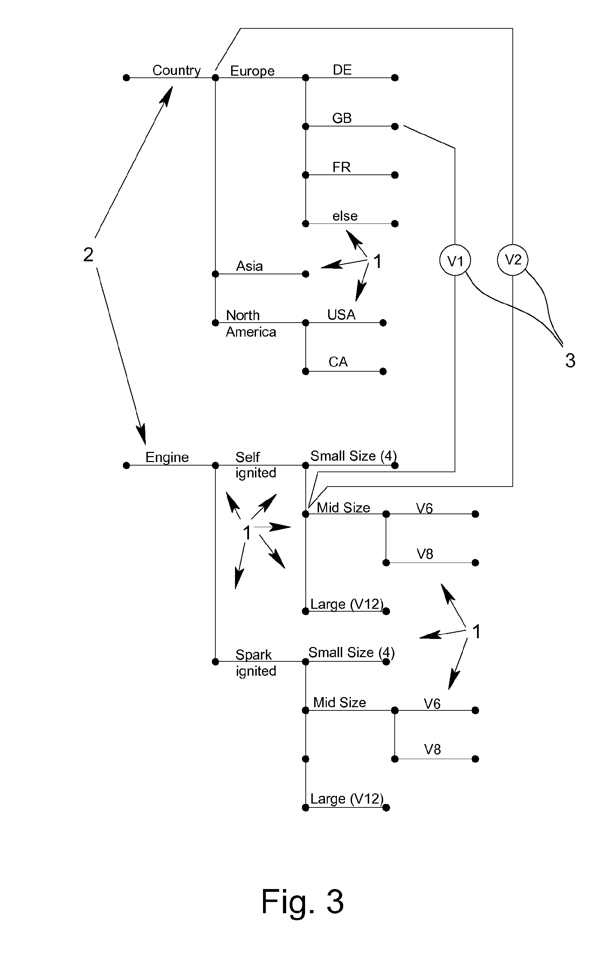

In Fig. 3 ist dargestellt, wie Produktvarianten 3 durch eine Auswahl von Produktmerkmalen 1 definiert werden. Die Produktvariante 3, V2 zeichnet sich beispielsweise durch die Produktmerkmale 1, Europe in der Merkmalkategorie 2, Country und die Produktmerkmale 1 Self-Ignited / Mid Size in der Merkmalkategorie 2, Engine aus. Die Produktvariante 3, V1 bezieht sich auf die Summe der Ländermerkmale GB und der Motormerkmale 1 in der Merkmalkategorie 2 Engine, nämlich Self-Ignited / Mid Size. Erkennbar ist jedenfalls aus Fig. 3, dass die Produktvarianten 3, V1, V2 jeweils durch eine Auswahl von Produktmerkmalen 1 definiert werden.

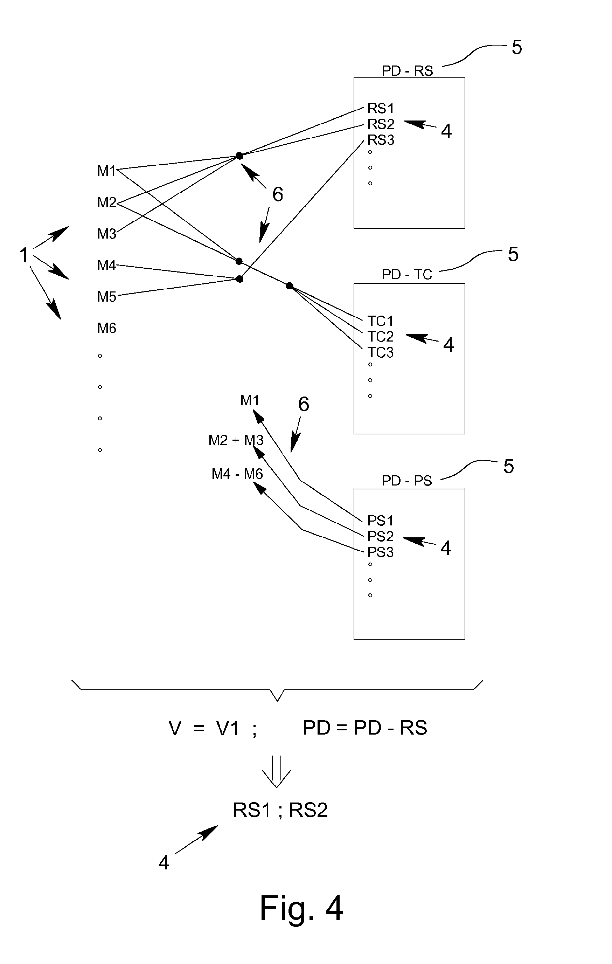

In Fig. 4 ist dargestellt, dass als eine interessierende Produktvariante V die Produktvariante V1 vorgegeben wird und dass als interessierende Domäne PD die Domäne PD-RS der Anforderungsspezifikationen vorgegeben wird. Durch automatisierte Auswertung der zuvor definierten Merkmal-Komponenten-Abhängigkeiten 6 lassen sich nun ohne weiteres die Komponenten 4 auffinden, die sich innerhalb der interessierenden Domäne PD befinden und gleichzeitig mit Produktmerkmalen in Verbindung stehen, die auch Bestandteil der interessierenden Produktvarianten V sind. Letztlich erfolgt die automatische Ausgabe der ermittelten Komponenten 4, in diesem Fall der Komponenten RS 1 und RS2, weil nach der oben getroffenen Annahme das Produktmerkmal M1 für das Produktmerkmal GB steht, wobei in der Domäne 5, PD-RS nur die Komponenten 4, RS1 und RS2 mit Merkmal M1 über Merkmal-Komponenten-Abhängigkeiten 6 in Verbindung stehen.

In dem dargestellten Ausführungsbeispiel sind das Variantenmodell 1, die Domänen 5 und die Merkmal-Komponenten-Abhängigkeiten 6 in einer gemeinsamen Datenbasis erfasst, d. h. dass die Daten in einer integrierten Softwarelösung verwaltet werden und Daten nicht über verschiedene Software-Schnittstellen aus anderen Anwendungen zusammengesucht werden müssen. Selbstverständlich können die in einer gemeinsamen Datenbasis erfassten Informationen möglicherweise von verschiedenen Anwendungen genutzt und bearbeitet werden, die nicht Bestandteil der integrierten Softwarelösung sind; die zu bearbeitenden Daten und die auch von verschiedenen Projektgruppen bearbeiteten Daten werden vorliegend zentral organisiert, insgesamt ergibt sich damit eine Client-Server-Struktur.

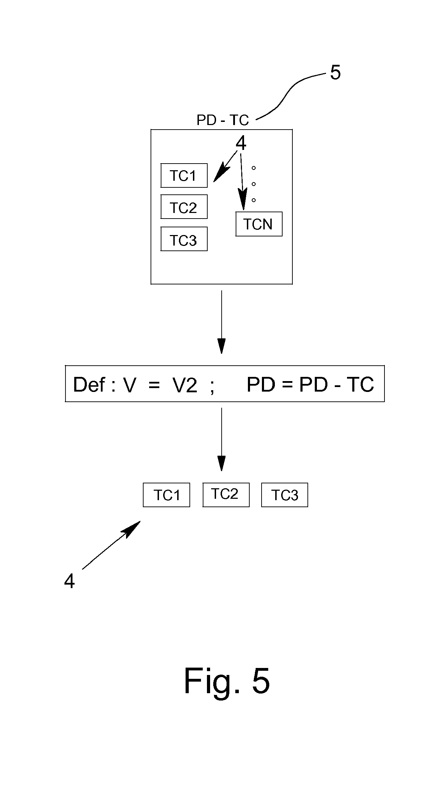

Fig. 5 zeigt, dass die Komponenten 4, TC1, ..., TCN innerhalb der Domäne 5, PD-TC der Testfälle in separaten Dateneinheiten abgelegt sind, angedeutet durch die Umrandung der jeweiligen Testfälle. Es wird nunmehr angenommen, dass das Produktmerkmal M2 abkürzend für das Produktmerkmal Europe in der Merkmalkategorie 2, Country steht. Unter Berücksichtigung der Merkmal-Komponenten-Abhängigkeiten 6, die in Fig. 2 angedeutet sind, führt die Vorgabe der interessierenden Produktvariante V = V2 und die Vorgabe der interessierenden Domäne PD = PD-TC zu der Extraktion der relevanten Komponenten 4, nämlich TC1, TC2 und TC3. Die extrahierten Komponenten 4 sind lediglich durch automatisierte Auswertung der Merkmal-Komponenten-Abhängigkeiten 6 aufgefunden worden, wobei die automatisierte Auswertung hier in einer reinen Existenzprüfung der Abhängigkeiten besteht. Die Tatsache, dass die Komponenten 4 innerhalb der Domäne 5, PD-TC in separaten Dateneinheiten abgelegt sind, erleichtert die Ausgabe der ermittelten Komponenten 4, TC1, TC2, TC3 in Form von unveränderten Dateneinheiten.

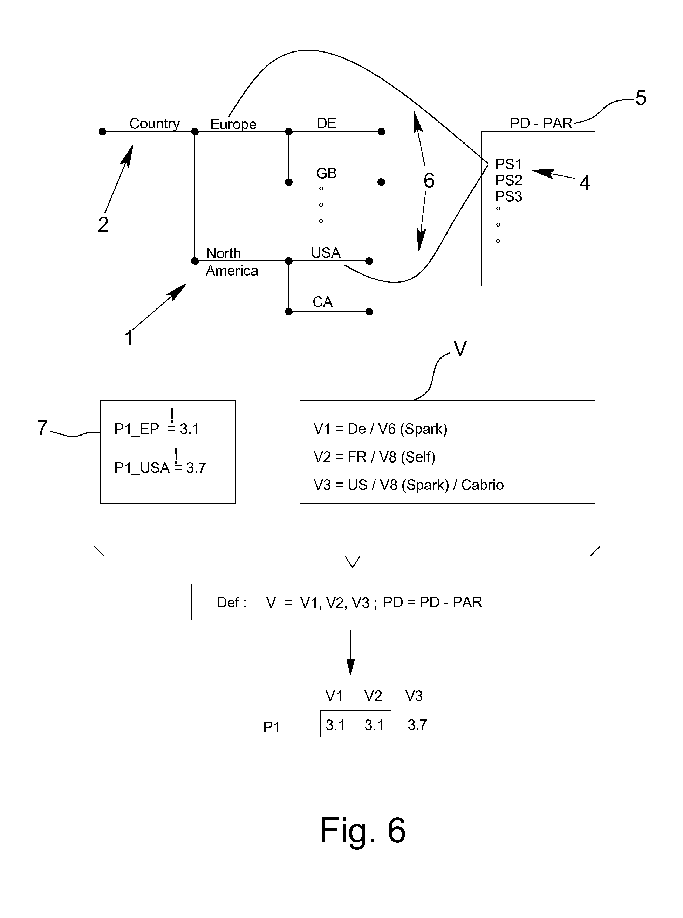

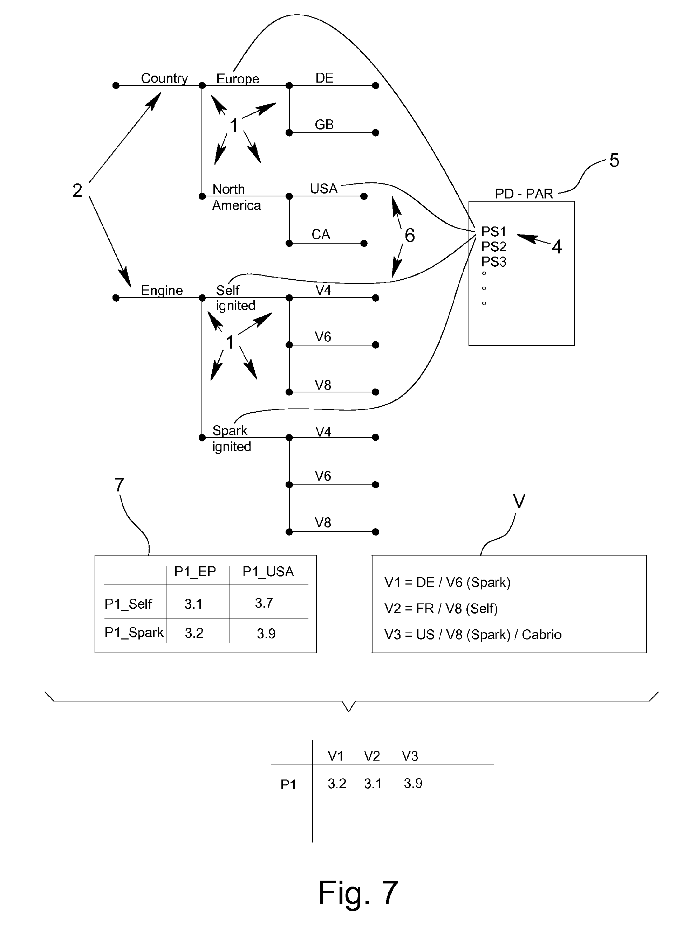

Die Fig. 6 und 7 zeigen Besonderheiten des Verfahrens, die in Zusammenhang stehen mit der Handhabung von Merkmal-Komponenten-Abhängigkeiten 6, die als Wertabhängigkeiten klassifiziert sind. In Fig. 6 ist zunächst zu sehen, dass die Domäne 5, PD-PAR der Parameter die Komponenten 4, PS1, PS2 und PS3 aufweist. Es werden zwei Merkmal-Komponenten-Abhängigkeiten 6 definiert, die mit dem Parameter P1 in Zusammenhang steht, nämlich zum einen zum Produktmerkmal 1, Europe und zum anderen zum Produktmerkmal 1, USA. Da die beiden Merkmal-Komponenten-Abhängigkeiten 6 als Wertabhängigkeiten klassifiziert sind, sind zunächst Wertvorgaben 7 für die Komponente P1 erforderlich, und zwar in der Anzahl, die durch die Anzahl der Merkmal-Komponenten-Abhängigkeiten 6 innerhalb der einzigen Merkmalkategorie 2, Country vorgegeben ist. Diese verfahrensgemäß erforderliche Wertvorgabe ist in der Mitte von Fig. 6 dargestellt. Der Parameter P1 erhält für die Abhängigkeit zu dem Merkmal 1, Europe, den Wert 3.1 und er erhält für die Abhängigkeit zu dem Produktmerkmal 1, USA den Wert 3.7. Als interessierende Produktvarianten V werden die Produktvarianten V1, V2, V3 definiert. Die interessierende Produktvariante V1 besteht in der Produktmerkmal-Kombination DE/V6(spark), die interessierende Produktvariante V2 entspricht der Merkmalkombination FR/V8(Self) und die Produktvariante V3 entspricht der Merkmalskombination US/V8(Spark) /Cabrio.

Ganz unten in Fig. 6 ist dargestellt, zu welchem Ergebnis die Anwendung der unterschiedlichen interessierenden Produktvarianten V1, V2, V3 führt. Wenn unterstellt wird, dass als interessierende Produktvariante V alternativ V1, V2 oder V3 verwendet wird, und als interessierende Domäne PD die Domäne 5, PD-PAR der Parameter gewählt wird, wird für die interessierenden Produktvarianten V1, V2 für den Parameter P1 jeweils der Wert 3.1 erhalten und für die interessierende Produktvariante V3 wird für den Parameter P1 der Wert 3.7 erhalten. Bei der Prüfung der Merkmal-Komponenten-Abhängigkeiten 6 wird dabei so vorgegangen, wie dies schon anhand der anderen Ausführungsbeispiele zuvor erläutert worden ist. Zusätzlich wird hier eine Verfahrensweise angewendet, wonach eine für ein Produktmerkmal 1 auf höherer Hierarchieebene definierte Merkmal-Komponenten-Abhängigkeit 6 - im vorliegenden Fall die Abhängigkeit von Parameter P1 zu dem Produktmerkmal 1, Europe - auch auf solche Produktvarianten übertragen wird, die das Produktmerkmal auf niedrigere Hierarchieebene aufweisen. Im vorliegenden Beispiel bedeutet dies, dass die Vorgabe für den Parameter P 1 für das Produktmerkmal Europe, P1_EP auch angewendet wird für die Länder-Produktmerkmale DE und FR, da dieser auf niedrigerer Hierarchieebene unterhalb von dem Produktmerkmal 1, Europe angesiedelt sind. Die Werte für den Parameter P1 für die interessierenden Produktvarianten V1, V2 sind umrandet dargestellt, um anzudeuten, dass diese Werte auf einer einzigen Datenablage beruhen, nämlich im vorliegenden Fall auf der Datenablage für das Produktmerkmal 1, Europe für den Parameter P1 (Wertvorgabe 7).

In Fig. 7 ist ein komplexeres Beispiel dargestellt, das auf Merkmal-Komponenten-Abhängigkeiten 6 beruht, die ebenfalls als Wertabhängigkeiten klassifiziert sind. Im Unterschied zu dem Beispiel in Fig. 6 sind nun Merkmale 1 in zwei Merkmalkategorien 2, nämlich Country und Engine vorgegeben. Die Komponente 4, PS1 in der Domäne 5 der Parameter PD-PAR weist nun vier Merkmal-Komponenten-Abhängigkeiten 6 auf, die auf Merkmale 1 in zwei verschiedenen Merkmalkategorien 2 weisen. Die Zugehörigkeit der Merkmal-Komponenten-Abhängigkeiten 6 zu verschiedenen Merkmalkategorien 2 führt dazu, dass der Parameter PS 1 für alle möglichen Merkmalkombinationen mit Daten zu versehen ist, was in der Wertvorgabe 7 geschieht. Die Wertvorgabe 7 ist so ausgestaltet, dass sie die Vorgabe der kombinatorisch möglichen Zusammenstellungen von Produktmerkmalen 1 gestattet. Da Merkmal-Komponenten-Abhängigkeiten 6 zu jeweils zwei Produktmerkmalen 1 in zwei verschiedenen Merkmalkategorien 2 erfolgen, ist es erforderlich, 2*2 = 4 Wertvorgaben durchführen zu können. Die interessierenden Produktvarianten V sind identisch mit denen gemäß Fig. 6, genau wie der Filterungsprozess auf die verschiedenen interessierenden Produktvarianten V1, V2, V3, was bei den entsprechenden Filterungen zu den in Fig. 7 unten dargestellten Ergebnissen führt. Hätte die Komponente 4, PS1 zu einer Merkmalkategorie zwei Abhängigkeiten und zu einer zweiten Merkmalkategorie 20 Abhängigkeiten, müsste für den Parameter eine Wertvorgabe für 2*20 = 40 Werte erfolgen.

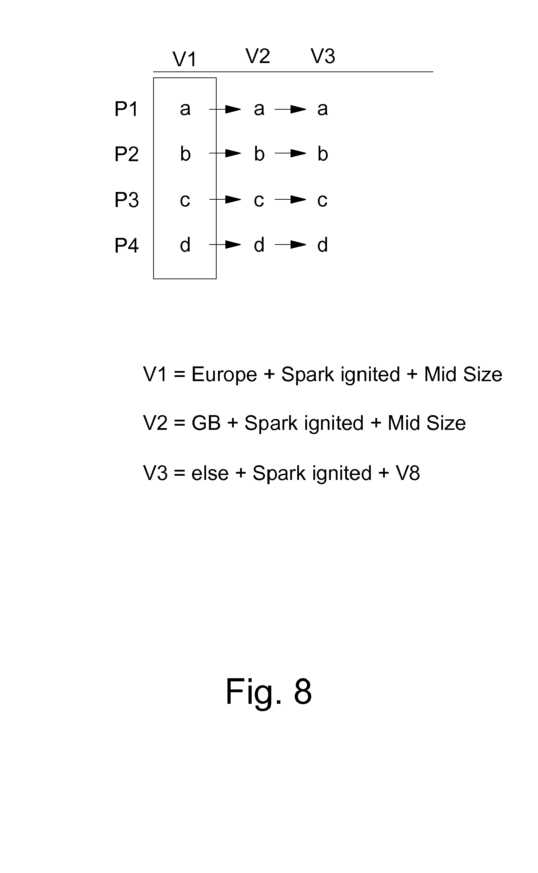

In Fig. 8 ist eine Variante des Verfahrens zur Datenverwaltung von Produktvarianten gezeigt, bei der die Existenz von Wertabhängigkeiten in hierarchisch gegliederten Merkmalkategorien genutzt wird. Ausgegangen wird hier von dem in Fig. 1 dargestellten Variantenmodell, bei dem sowohl die Länderkennungen Country als auch die Motorkennungen Engine hierarchisch gegliedert sind, wie dies zuvor ausgeführt worden ist. In dem Ausführungsbeispiel sind für die Komponenten 4, vorliegend für die Parameter P1, ..., P4 konkrete Werte vorgegeben worden hinsichtlich der Produktvariante V1, nämlich in Form der Werte a, b, c, und d. Wenn nun aus der Datenbasis diejenigen Parameter extrahiert werden sollen, die für die Varianten V2 und V3 gelten, dann können diese Parameter aufgrund der hierarchischen Abhängigkeit innerhalb der Merkmalkategorien der Länder und Motoren automatisch ermittelt werden.

Für die Produktvariante V2 der für Großbritannien einzusetzenden Steuergeräte für Otto-Motoren mittlerer Größe sind keine Parameterwerte vorgegeben worden. In diesem Fall wird die für ein Produktmerkmal auf höherer Hierarchieebene definierte Merkmal-Komponenten-Abhängigkeit auch auf solche Varianten übertragen, die das Produktmerkmal auf niedrigerer Hierarchieebene aufweisen. Im vorliegenden Fall werden also die auf höherer Hierarchieebene liegenden Vorgaben der Produktvariante V1 für Europa für den gleichen Typ von Motor auch auf Großbritannien übertragen, also auf die Produktvariante V2. Sollten jedoch - zumindest teilweise - für die Produktvariante V2 einige Parameter mit Werten belegt worden sein, haben die lokal vorgegebenen Werte Vorrang vor denjenigen Werten, die durch eine hierarchische Werteabhängigkeit übertragen werden könnten. Das gleiche Prinzip kommt auch für die Produktvariante V3 zur Anwendung, die für Steuergeräte aller sonstigen europäischen Länder gilt, sofern Otto-Motoren mit acht Zylindern betroffen sind. Auch hier können aufgrund der Hierarchieverhältnisse die für die Produktvariante V1 vorgegebenen Parameter a, b, c, d auf die Produktvariante V3 übertragen werden. Wichtig ist, dass die Auswahl des Motortyps in den Produktvarianten V1 und V2 unerheblich ist, sofern sich die Abhängigkeit des Parameters ausschließlich auf die Merkmalkategorie Country bezieht.

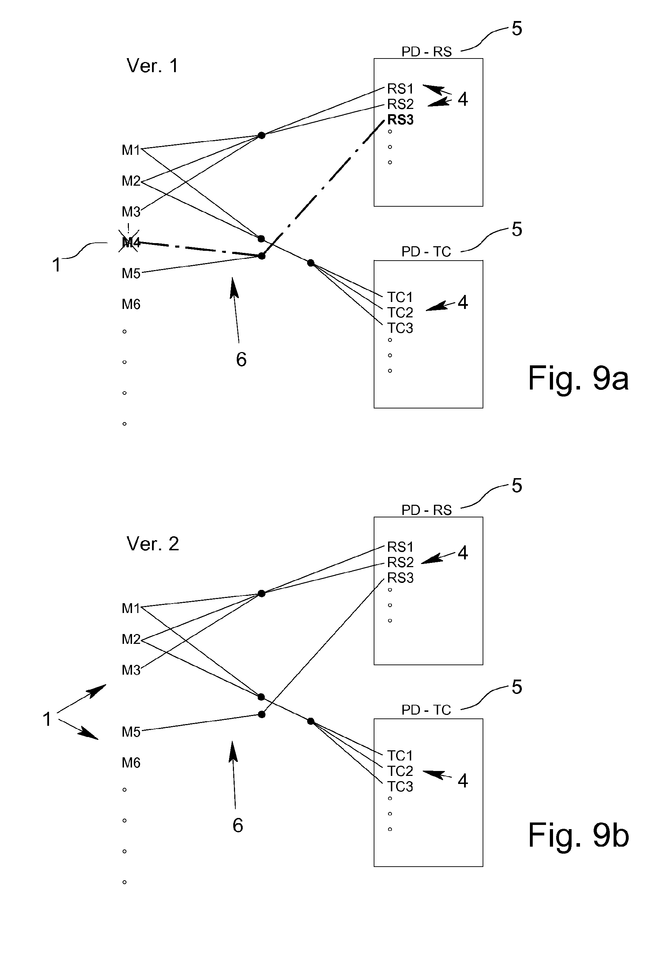

In Fig. 9a, 9b ist dargestellt, wie bestimmte drohende Inkonsistenzen bei der Veränderung des Variantenmodells und/oder des Domänenmodells erkannt und umgangen werden können. In Fig. 9a wird die Löschung des zuvor definierten Produktmerkmals 3, M4 vorgegeben, angedeutet durch das durchgestrichen gezeichnete Produktmerkmal M4. Nun wird durch Auswertung der vorhandenen Merkmal-Komponenten-Abhängigkeiten 6 ermittelt, ob das zu löschende Produktmerkmal 1, M4 mit Komponenten 4 assoziiert ist. Wird eine vorhandene Verknüpfung gefunden, wird die vorhandene Merkmal-Komponenten-Abhängigkeit 6 angezeigt, in Fig. 9a durch die strichpunktierte Linie angedeutet. Die Löschung des zu löschenden Produktmerkmals M4 wird ausgesetzt. In Fig. 9b ist eine Erweiterung des in Fig. 9a dargestellten Verfahrens zu erkennen, mit der nicht nur möglich Konflikte aufgezeigt, sondern vielmehr auch so behoben werden können, dass Inkonsistenzen in der Datenverwaltung vermieden werden. Nach Erkennen der Existenz einer vorhandenen Merkmal-Komponenten-Abhängigkeit 6 gemäß Fig. 9a wird eine neue Version Ver. 2 des verwalteten Datenbestandes in Form einer Kopie des verwalteten Datenbestandes erzeugt. Der zuvor geltende Datenbestand wird ebenfalls versioniert, in Fig. 9a angedeutet durch Ver. 1. In der neu erzeugten Version Ver. 2 des verwalteten Datenbestandes wird das zu löschende Produktmerkmal M4 entfernt, so dass keine ins Leere greifenden Merkmal-Komponenten-Abhängigkeiten entstehen bzw. übrig bleiben.

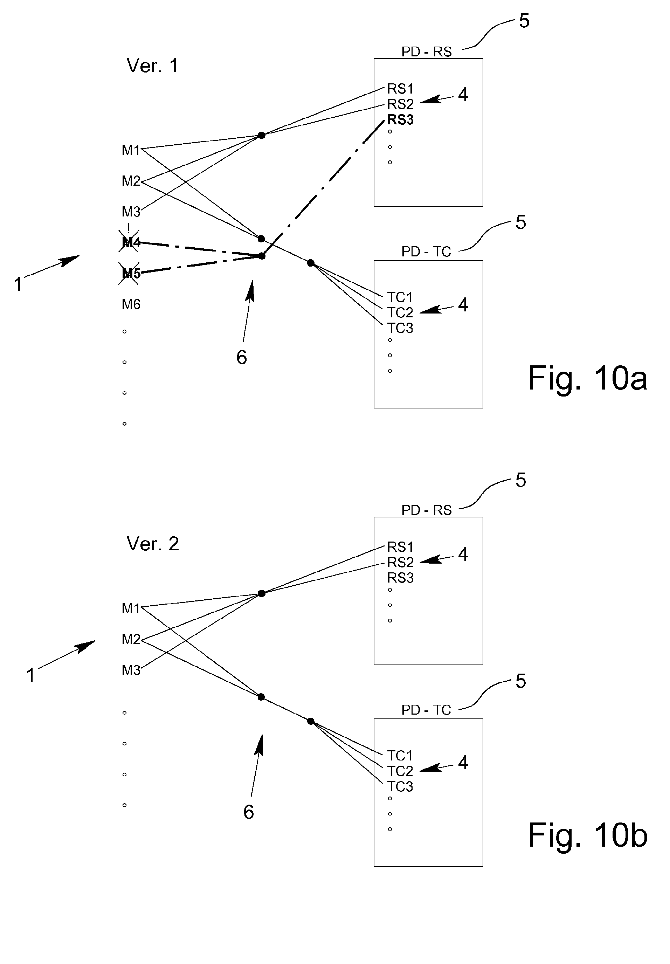

In den Fig. 10a, 10b ist eine noch weiter entwickelte Variante des Verfahrens dargestellt. Im Unterschied zu dem Beispiel in Fig. 9a, 9b wird in Fig. 10a, 10b vorgegeben, dass das Produktmerkmal 1 in Form der Produktmerkmale M4 und M5 zu löschen sind. Genau wie in Fig. 9 wird zunächst überprüft, ob die zu löschenden Produktmerkmale M4 und M5 mit Komponenten 4 assoziiert sind, so dass ein möglicher Konflikt droht. Bei Erkennung dieser Abhängigkeit wird - wie in Fig. 9 auch - eine Kopie des verwalteten Datenbestandes erzeugt (Ver. 2), wobei nicht nur die zu löschenden Produktvarianten V4 und V5 in der neu erzeugten Version Ver. 2 des verwalteten Datenbestandes entfernt werden, sondern auch die mit den gelöschten Produktmerkmalen M4, M5 assoziierten Merkmal-Komponenten-Abhängigkeiten 6. Dies war bei dem Ausführungsbeispiel gemäß Fig. 9 nicht ohne weiteres möglich, da die Komponente RS3 hier noch mit einem anderen Produktmerkmal 1, nämlich dem Produktmerkmal M5 assoziiert gewesen ist.

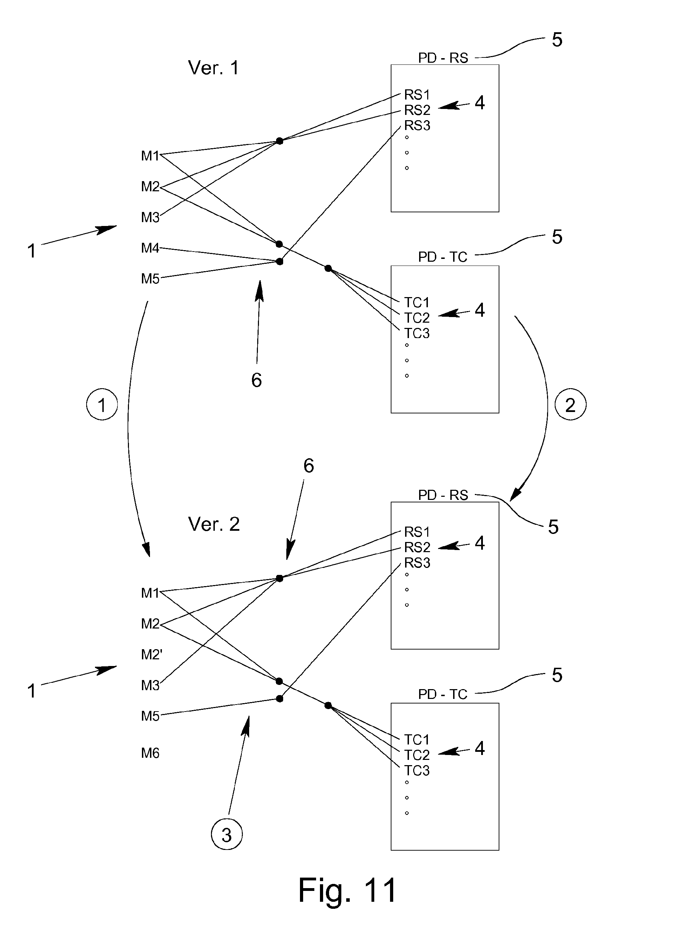

In Fig. 11 ist eine Weiterbildung des beanspruchten Verfahrens dargestellt, bei der eine neue Version Ver. 2 des Variantenmodells durch eine veränderbare Kopie einer alten Version Ver. 1 des Variantenmodells erzeugt wird. Alternativ kann auch eine neue Version Ver. 2 des aus allen Domänen 5 und aus allen Merkmal-Komponenten-Abhängigkeiten 6 bestehenden Domänenmodells durch eine veränderbare Kopie einer alten Version Ver. 1 des Domänenmodells erzeugt werden. Von Bedeutung ist jedenfalls, dass derartige Kopien unter Vergabe einer nächsten Versionsnummer von Variantenmodell und von Domänenmodell unabhängig voneinander erzeugt werden können. Im in Fig. 11 dargestellten Beispiel wird jedenfalls zunächst eine neue Version Ver. 2 des Variantenmodells erzeugt, was durch die umkreiste 1 angedeutet wird.

Version Ver. 2 des Variantenmodells wird nachfolgend verändert, beispielsweise wird das Produktmerkmal M4 gelöscht, zusätzlich entstehen die Produktmerkmale M2', und M6. Nachdem das Variantenmodell in Version Ver. 2 gegenüber Version Ver. 1 abgewandelt worden ist, besteht der Wunsch, das Domänenmodell ebenfalls auf Version Ver. 2 des Variantenmodells zu übertragen. Dazu ist vorgesehen, dass bei einem Wechsel von einer alten Version Ver. 1 des Variantenmodells auf eine neue Version Ver. 2 des Variantenmodells zunächst eine neue Version Ver. 2 des Domänenmodells durch Kopie der alten Version Ver. 1 des Domänenmodells erzeugt wird und die mit der alten Version Ver. 1 des Variantenmodells assoziierten Merkmal-Komponenten-Abhängigkeiten 6 automatisch durch Auswerten von Referenzen oder durch Auswertung von Korrespondenzen in die neue Version Ver. 2 des Variantenmodells übertragen werden. Das Kopieren des Domänenmodells von der alten Version Ver. 1 in die neue Version Ver. 2 ist in Fig. 11 durch den mit der umkreisten 2 gekennzeichneten Schritt angedeutet. Der Vollständigkeit halber sei erwähnt, dass direkt nach dem Kopieren des Domänenmodells in Version Ver. 2 die von den Komponenten 4 ausgehenden Merkmal-Komponenten-Abhängigkeiten 6 noch mit den Produktmerkmalen des Variantenmodells in Version Ver. 1 assoziiert sind, was in Fig. 11 im Einzelnen nicht dargestellt ist. Diese Merkmal-Komponenten-Abhängigkeiten 6 zwischen verschiedenen Versionen des Datenbestandes werden durch die Auswertung von Referenzen oder von Korrespondenzen - wie oben beschrieben - auf die Produktvarianten in Version Ver. 2 automatisch "umgebogen", dies entspricht dem mit der umkreisten 3 gekennzeichneten Verfahrensschritt.

## Patentansprüche

1. Computerimplementiertes Verfahren zur Datenverwaltung von Produktvarianten in der Steuergeräteentwicklung
**gekennzeichnet durch**,
zunächst
- die Vorgabe von Produktmerkmalen (1) in einem Variantenmodell,
- die Vorgabe von Komponenten (4) in wenigstens einer Domäne (5),
- die Definition von Merkmal-Komponenten-Abhängigkeiten (6) **durch** Zuordnung von Komponenten (4) zu wenigstens einem Produktmerkmal (1),
nachfolgend
- die Vorgabe wenigstens einer interessierenden Produktvariante (V) **durch** eine Auswahl von Produktmerkmalen (1),
- die Vorgabe wenigstens einer interessierenden Domäne (PD),
- automatische Ermittlung der zu der interessierenden Produktvariante (V) gehörenden Komponenten (4) **durch** automatisierte Auswertung der Merkmal-Komponenten-Abhängigkeiten (6),
- automatische Ausgabe der ermittelten Komponenten (4).

2. Computerimplementiertes Verfahren nach Anspruch 1, **dadurch gekennzeichnet, dass** das Variantenmodell, die Domänen (5) und die Merkmal-Komponenten-Abhängigkeiten (6) in einer gemeinsamen Datenbasis erfasst werden.

3. Computerimplementiertes Verfahren nach Anspruch 1 oder 2, **dadurch gekennzeichnet, dass** die definierten Merkmal-Komponenten-Abhängigkeiten (6) Existenzabhängigkeiten und/oder Wertabhängigkeiten sind.

4. Computerimplementiertes Verfahren nach einem der Ansprüche 1 bis 3, **dadurch gekennzeichnet, dass** die Komponenten (4) innerhalb einer Domäne (5) in separaten Dateneinheiten abgelegt werden.

5. Computerimplementiertes Verfahren nach Anspruch 4, **dadurch gekennzeichnet, dass** die automatisierte Auswertung der Merkmal-Komponenten-Abhängigkeiten (6) in einer Existenzprüfung der Abhängigkeit besteht, insbesondere wobei die mit den ermittelten Komponenten (4) in Zusammenhang stehenden Dateneinheiten unverändert abgelegt werden.

6. Computerimplementiertes Verfahren nach einem der Ansprüche 1 bis 3, **dadurch gekennzeichnet, dass** die Komponenten (4) innerhalb einer Domäne (5) in einer gemeinsamen Dateneinheit abgelegt werden.

7. Computerimplementiertes Verfahren nach Anspruch 6, **dadurch gekennzeichnet, dass** die automatisierte Auswertung der Merkmal-Komponenten-Abhängigkeiten (6) in einer Existenzprüfung der Abhängigkeit besteht, wobei die mit den ermittelten Komponenten (4) in Zusammenhang stehenden Einträge aus der gemeinsamen Dateneinheit extrahiert und ausgegeben werden.

8. Computerimplementiertes Verfahren nach Anspruch 7, **dadurch gekennzeichnet, dass** die mit den ermittelten Komponenten (4) in Zusammenhang stehenden Einträge aus der gemeinsamen Dateneinheit extrahiert werden und jeder Eintrag separat ausgegeben wird, insbesondere in einer separaten Datei ausgegeben wird.

9. Computerimplementiertes Verfahren nach einem der Ansprüche 1 bis 8, **dadurch gekennzeichnet, dass** die Produktmerkmale (4) in wenigstens einer Merkmalkategorie (2) hierarchisch gegliedert definiert werden.

10. Computerimplementiertes Verfahren nach Anspruch 9, **dadurch gekennzeichnet, dass** eine für ein Produktmerkmal (1) auf höherer Hierarchieebene definierte Merkmal-Komponenten-Abhängigkeit (6) auch auf solche Produktvarianten (V) übertragen wird, die das Produktmerkmal (1) auf niedrigerer Hierarchieebene aufweisen, insbesondere wobei es sich bei den dadurch übertragenen Komponenten (4) um Parameter handelt.

11. Computerimplementiertes Verfahren nach Anspruch 9 oder 10, **dadurch gekennzeichnet, dass** zwischen einer Komponente (4) und mehreren Produktmerkmalen (1) in mehreren Merkmalkategorien (VK) jeweils eine Wertabhängigkeit definiert wird und insbesondere vk1*vk2*...*vkn Wertevorgaben für die Komponente (4) für die verschiedenen Kombinationen der Produktmerkmale (1) gemacht werden, wobei vk1, vk2, ..., vkn die Anzahlen der Merkmal-Komponenten-Abhängigkeiten (6) in Form von Wertabhängigkeiten in den verschiedenen Merkmalkategorien VK1, VK2, ...,VKn sind.

12. Computerimplementiertes Verfahren nach einem der Ansprüche 1 bis 11, **dadurch gekennzeichnet, dass** als Komponenten (4) Testfälle in der Domäne der Produkttests vorgegeben werden, und/oder dass als Komponenten (4) Modelle in der Domäne der Produktmodelle vorgegeben werden, und/oder dass als Komponenten (4) Parameter und/oder Parametersätze in der Domäne der Produktparameter vorgegeben werden, und/oder dass als Komponenten (4) Anforderungen in der Domäne der Anforderungsspezifikationen vorgegeben werden, und/oder dass als Komponenten Testsystembeschreibungen in der Domäne der Testsysteme vorgegeben werden.

13. Computerimplementiertes Verfahren nach einem der Ansprüche 1 bis 12, **dadurch gekennzeichnet, dass** bei Vorgabe der Löschung eines zuvor definierten Produktmerkmals (1) durch Auswertung der vorhandenen Merkmal-Komponenten-Abhängigkeiten (6) ermittelt wird, ob das zu löschende Produktmerkmal (1) mit Komponenten (4) assoziiert ist, vorhandene Merkmal-Komponenten-Abhängigkeiten (6) aufgezeigt werden, wobei vorzugsweise die Löschung des zu löschenden Produktmerkmals (1) ausgesetzt wird.

14. Computerimplementiertes Verfahren nach Anspruch 13, **dadurch gekennzeichnet, dass** bei Existenz einer vorhandenen Merkmal-Komponenten-Abhängigkeit (6) automatisch, ggf. nach Freigabe durch den Nutzer, eine neue Version (Ver. 2) des verwalteten Datenbestandes in Form einer Kopie des verwalteten Datenbestandes erzeugt wird, wobei in der neu erzeugten Version (Ver. 2) des verwalteten Datenbestandes das zu löschende Produktmerkmal (1) entfernt wird, wobei insbesondere auch die mit dem gelöschten Produktmerkmal (1) assoziierten Merkmal-Komponenten-Abhängigkeiten (6) gelöscht werden.

15. Computerimplementiertes Verfahren nach Anspruch 14, **dadurch gekennzeichnet, dass** solche Komponenten (4) automatisch aus dem verwalteten Datenbestand gelöscht werden, die Merkmal-Komponenten-Abhängigkeiten (6) ausschließlich zu dem gelöschten Produktmerkmal (1) aufweisen.

16. Computerimplementiertes Verfahren nach einem der Ansprüche 1 bis 15, **dadurch gekennzeichnet, dass** eine neue Version (Ver. 2) des Variantenmodells durch eine veränderbare Kopie einer alten Version (Ver. 1) des Variantenmodells erzeugt wird und/oder dass eine neue Version (Ver. 2) des aus allen Domänen (5) und allen Merkmal-Komponenten-Abhängigkeiten (6) bestehenden Domänenmodells durch eine veränderbare Kopie einer alten Version (Ver. 1) des Domänenmodells erzeugt wird.

17. Computerimplementiertes Verfahren nach Anspruch 16, **dadurch gekennzeichnet, dass** beim einem Wechsel einer alten Version (Ver. 1) eines Domänenmodells auf eine neue Version (Ver. 2) des Variantenmodells zunächst eine neue Version (Ver. 2) des Domänenmodells durch Kopie der alten Version (Ver. 1) des Domänenmodells erzeugt wird und die mit der alten Version (Ver. 1) des Variantenmodells assoziierten Merkmal-Komponenten-Abhängigkeiten (6) automatisch durch Nutzung kopierter Referenzen und/oder von Korrespondenzen und/oder von Markern in der neuen Version (Ver. 2) des Variantenmodells übertragen werden.

18. Computerimplementiertes Verfahren nach Anspruch 17, **dadurch gekennzeichnet, dass** das automatische Auffinden von Korrespondenzen durch Vergleich von Benennungen und/oder von Merkmalskombinationen der Merkmalkategorien in der alten Version (Ver. 1) des Variantenmodells mit Benennungen und/oder von Merkmalskombinationen der Merkmalkategorien (2) in der neuen Version (Ver. 2) des Variantenmodells erfolgt.
